# EUROPÄISCHE PATENTSCHRIFT

(11) **EP 1 044 859 B1**
(45) Veröffentlichungstag und Bekanntmachung des Hinweises auf die Patenterteilung: **07.07.2004**
(21) Anmeldenummer: 00102532.9
(22) Anmeldetag: 07.02.2000
(51) Int. Cl.: B60S 3/00

(54) **Trocknungsvorrichtung zum Trocknen von Fahrzeugen in Fahrzeugwaschanlagen**
Drying device for drying vehicles in a car wash
Dispositif de séchage pour sécher les véhicules dans une station de lavage de voiture

(30) Priorität: 14.04.1999 DE 19916654
(43) Veröffentlichungstag der Anmeldung: 18.10.2000
(73) Patentinhaber: WashTec Holding GmbH, 86153 Augsburg (DE)
(72) Erfinder: Decker, Wolfgang, 86441 Zusmarshausen-Wollbach (DE); Zeyer, Pierre, 68500 Wuenheim (FR)
(74) Vertreter: Rapp, Bertram, Dr.

(56) Entgegenhaltungen:
- DE-A- 2 314 072
- DE-A- 3 401 379
- DE-B- 2 334 840
- DE-U- 9 422 132
- US-A- 3 780 448
- US-A- 4 981 523
- PATENT ABSTRACTS OF JAPAN vol. 1997, no. 06, 30. Juni 1997 (1997-06-30) -& JP 09 039746 A (NISSEI BUILD KOGYO CO LTD), 10. Februar 1997 (1997-02-10)

## Beschreibung

Die Erfindung betrifft eine Trocknungsvorrichtung und ein Verfahren zum Trocknen von Fahrzeugen in Portalwaschanlagen nach dem Oberbegriff des Anspruchs 1 bzw. 6.

Aus der DE 34 01 379 A1 ist ein gattungsgemäßes Verfahren und eine Vorrichtung zum Reinigen bzw. Waschen, Trocknen oder Polieren von Kraftfahrzeugen bekannt, bei der eine mit Öffnungen versehene horizontale Leitung in der Vertikalen und in der Horizontalen bewegbar ist und sich ferner um ihre Achse drehen läßt. Dadurch soll erreicht werden, daß die Öffnungen der Leitung jeweils senkrecht auf die Oberfläche des Kraftfahrzeugs gerichtet sind und daß ein Wischkörper-Medium-Gemisch in optimaler Weise wirken kann.

Bei Portalwaschanlagen ergibt sich jedoch vielfach das Problem, daß die über dem Fahrzeug befindlichen Teile des Portals während des Waschvorgangs mit Wasser benetzt werden und somit ein Nachtropfen auf bereits getrocknete Flächen des Fahrzeugs erfolgt.

Der Erfindung liegt daher die Aufgabe zugrunde, eine Trocknungsvorrichtung zum Trocknen von Fahrzeugen in Fahrzeugwaschanlagen und ein Verfahren zum Trocknen von Fahrzeugen in einer Portalwaschanlage der eingangs genannten Art zu schaffen, bei denen eine verbesserte Trocknung erreicht werden kann.

Dies wird nach der Erfindung durch die Merkmale der Ansprüche 1 und 6 erreicht.

Bei der erfindungsgemäßen Trocknungseinrichtung können nicht nur senkrechte und unterhalb des Stoßstangenniveaus befindliche Flächen eines Fahrzeuges in idealem Aufprallwinkel von 90° +/- X und mit dem Luftstrom beaufschlagt werden, sondern es können auch über dem Fahrzeug befindliche Teile des Portals abgeblasen werden. Während des Waschvorganges werden nämlich über dem Fahrzeug befindliche Teile des Portals, wie z. B. die Portaltraverse mit Wasser benetzt. Während des Trocknungsvorganges fallen dann infolge von Erschütterungen des Portals und Luftbewegungen Wassertropfen auf die bereits getrockneten Flächen des Fahrzeuges. Dies kann mit der erfindungsgemäßen Trocknungsvorrichtung vermieden werden. Die unbegrenzte Schwenkmöglichkeit des Düsengehäuses ermöglicht es nämlich beim Absenken des Düsengehäuses vor dem eigentlichen Trocknungsvorgang die Austrittsdüse nach oben zu richten. Durch Hin- und Herschwenken des Düsengehäuses läßt sich dann die Portaltraverse ähnlich wie die Fahrzeugoberfläche abblasen, so daß zunächst Wassertropfen von der Portaltraverse entfernt werden, bevor der eigentliche Trocknungsvorgang beginnt. Während des anschließenden Trocknungsvorganges, bei welchem das Düsengehäuse so geschwenkt wird, daß die Austrittsrichtung der Austrittsdüse zum Fahrzeug gerichtet ist, können dann keine Wassertropfen mehr von der Portaltraverse auf bereits getrocknete Partien des Fahrzeuges fallen.

Die Erfindung geht also unter anderem von dem Gedanken aus, Teile des Portals, die über der Fahrzeughöhe liegen, vor dem eigentlichen Trocknungsvorgang mittels der für die Trocknung des Fahrzeuges vorgesehenen Trocknungsdüse abzublasen und weitgehend von Wasser zu befreien.

Demgemäß betrifft die Erfindung auch ein Verfahren zum Trocknen von Fahrzeugen in einer Fahrzeugwaschanlage, insbesondere einer Portalfahrzeugwaschanlage, wie es in den Ansprüchen 6 und 7 näher gekennzeichnet ist.

Vorteilhafte Ausgestaltungen der erfindungsgemäßen Trocknungsvorrichtung sind in den Ansprüchen 2 bis 5 gekennzeichnet.

Die Erfindung wird in folgendem anhand eines in Zeichnung dargestellten Ausführungsbeispieles näher erläutert. Es zeigen:

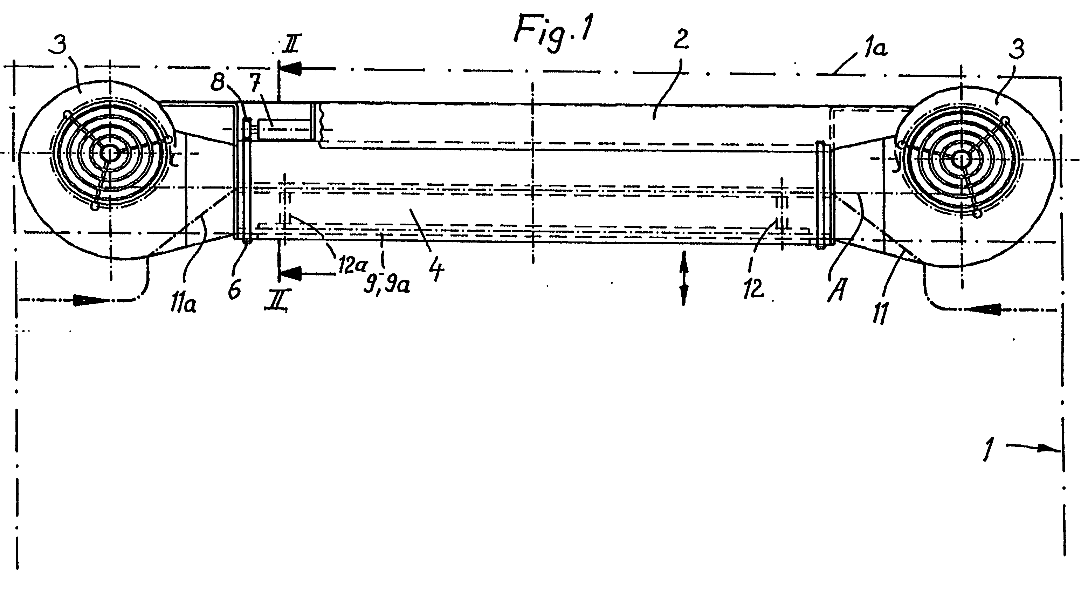

- **Figur 1**: Eine Ansicht der wichtigsten Teile der Trocknungsvorrichtung,
- **Figur 2**: einen Querschnitt nach der Linie II 2 der Figur 1,
- **Figur 3 bis Figur 9**: ähnliche Querschnitte mit verschiedenen Betriebsstellungen des Düsengehäuses.

In dem strichpunktiert dargestellten Portal 1, z. B. einer Portalwaschanlage ist ein sich quer zur Fahrzeuglängsrichtung erstreckender Querträger 2 mittels ansich bekannter Steuereinrichtungen in Abhängigkeit der Fahrzeugkontur und sonstigen Erfordernissen in bekannter Weise höhenbeweglich gelagert. Die erfindungsgemäße Trocknungsvorrichtung ist besonders vorteilhaft im Zusammenhang mit einer Portalwaschanlage, bei der das Fahrzeug während des Waschvorganges und des anschließenden Trocknungsvorganges ruht und das Portal sich gegenüber dem Fahrzeug in Fahrzeuglängsrichtung hin und her bewegt.

Mit dem Querträger 2 sind die beiden Gebläse 3 fest verbunden. Ein zwischen den beiden Gebläsen 3 angeordnetes Düsengehäuse 4 ist um die horizontale und quer zur Fahrzeuglängsrichtung verlaufende Achse A um mindestens 360° schwenkbar. Das Düsengehäuse 4 weist zumindest eine sich quer zur Fahrzeuglängsrichtung, d. h. in Richtung des Düsengehäuses 4, erstreckende schlitzförmige Austrittsdüse 5 auf.

Um das Düsengehäuse 4 in der gewünschten Weise um die Schwenkachse A zu verschwenken, ist an dem Düsengehäuse 4 ein Zahnkranz 6 angeordnet. In diesen Zahnkranz 6 greift ein vom Stellmotor 7 angetriebenes Ritzel 8 ein. Die Steuerung des Stellmotors 7 erfolgt in bekannter Weise in Abhängigkeit von der Fahrzeugkontur und/oder Stellung des Portals 1. Die Fahrzeugkontur wird beispielsweise über Photozellen erfaßt und unter Einbeziehung des über Inkremental-Geber erfaßten Portalvorschubes in einen Microprozessor eingegeben, der die jeweils optimale Austrittsrichtung R des Luftstromes aus der Austrittsdüse 5 in Bezug auf die jeweils zu trocknenden Fahrzeugpartien berechnet und dementsprechend auf den Stellmotor 7 einwirkt. Es sind auch andere Steuerungen für den Stellmotor denkbar.

Damit auf das Fahrzeug vor und/oder während des Waschvorganges Reinigungsmittel und vor dem Trocknungsvorgang Wachs und/oder Trocknungsmittel auf das Fahrzeug aufgebracht werden können, ist vorzugsweise an dem der Austrittsdüse 5 gegenüberliegenden Bereich des Düsengehäuses 4 mindestens ein sich in Richtung der Schwenkachse A erstreckendes Sprührohr mit mehreren Sprühdüsen 10 vorgesehen. Ein weiteres Sprührohr 9 a mit Sprühdüsen 10 a kann zur Zuführung von Waschwasser unter Hochdruck vorgesehen sein, um eine Hochdruckreinigung des Fahrzeuges durchführen zu können. Mittels des Stellmotors 7 kann insbesondere das Sprührohr 9 a in eine für die Hochdruckreinigung optimale Stellung geschwenkt werden, so daß ein idealer Aufprallwinkel der Hochdruckstrahlen von 90° gegenüber der Fahrzeugoberfläche erreicht wird.

Jedem der Sprührohre 9, 9 a ist eine Zuleitung 11, 11 a zugeordnet, die zweckmäßig zentral im Bereich der Schwenkachse A in das Düsengehäuse 4 eingeführt ist und die über mindestens eine radiale Verbindungsleitung 12, 12 a mit dem jeweiligen Sprührohr 9, 9 a verbunden ist.

Wie bereits oben erwähnt wurde, sind die beiden Gebläse 3 fest mit dem Querträger 2 verbunden, also unverschwenkbar angeordnet. Mittels des Querträgers 2 sind die beiden Gebläse 3 zusammen mit dem Düsengehäuse 4 höhenbeweglich. Um die Austrittsrichtung R der Austrittsdüse 5 bzw. der Sprühdüsen 10, 10 a optimal gegenüber der Fahrzeugoberfläche und die Austrittsrichtung R der Austrittsdüse 5 auch gegenüber der Traverse 1 a des Portals 1 optimal einstellen zu können, ist bei dieser Ausgestaltung nur ein Verschwenken des Düsengehäuses 4, nicht jedoch der Gebläse 3 erforderlich. Es müssen also mittels des Stellmotors 7 nur verhältnismäßig geringe Massen bewegt werden, so daß Schwenkbewegungen beliebig rasch und unter Verwendung eines verhältnismäßig kleinen Stellmotors erfolgen können.

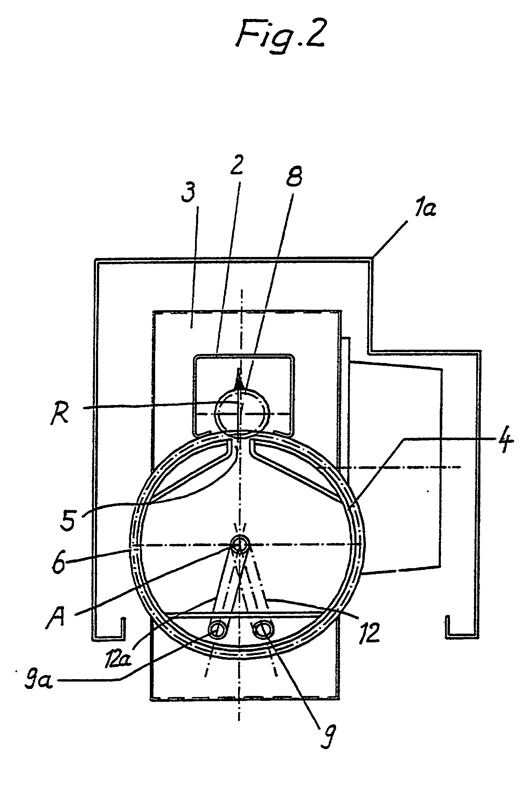

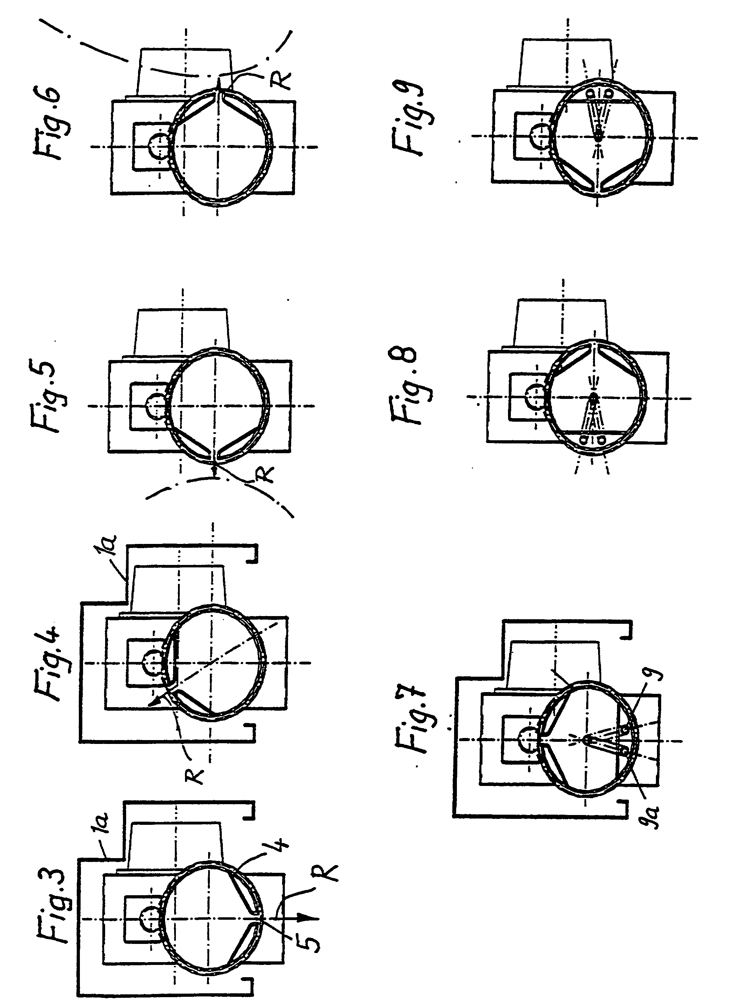

Wie man aus den Figuren 2 und 7 erkennen kann, ist die Trocknungsvorrichtung bestehend aus dem Querträger 2, den Gebläsen 3 und dem Düsengehäuse 4 während des Waschvorganges in die Portaltraverse 1 a einfahrbar. Die Trocknungsvorrichtung kann jedoch gegebenenfalls auch während des Waschvorganges unterhalb oder an einer Seite der Portaltraverse angeordnet sein. In jedem Fall werden die Portaltraverse 1 a und auch gegebenenfalls andere, über dem Fahrzeug befindliche Teile der Portalwaschanlage während des Waschvorganges mit Wasser benetzt. Insbesondere an horizontalen Konstruktionsteilen bleiben Wassertropfen hängen, die während des Trocknungsvorganges abfallen und zu unerwünschten Microtropfen auf den bereits getrockneten Flächen des Fahrzeuges führen können. Um dies zu verhindern, wird das Düsengehäuse 4 vor Beginn des eigentlichen Trocknungsvorganges mittels des Stellmotors 7 in eine Stellung geschwenkt, in welcher die Austrittsrichtung R der Austrittsdüse 5 gemäß Figur 4 nach oben gerichtet ist. Wenn anschließend der Querträger 2 mit dem Düsengehäuse 4 nach unten abgesenkt wird, um die Front- oder Heckpartie des Fahrzeuges zu trocknen, werden zunächst durch den nach oben gerichteten Luftstrom Wassertropfen, insbesondere von horizontalen Konstruktionsteilen der Portaltraverse 1 a abgeblasen. Der Abblaseffekt kann noch verbessert werden, indem man während des Absenkens des Querträgers 2 das Düsengehäuse 4 um die Schwenkachse A verschwenkt oder hin und her schwenkt. Das Abblasen der Portaltraverse erfordert keinen zusätzlichen Zeitaufwand, denn das Düsengehäuse 4, welches sich während des Waschvorganges innerhalb der Traverse 1 a befindet, muß vor Beginn des eigentlichen Trocknungsvorganges ohnehin bis zum Stoßstangenniveau des Fahrzeuges abgesenkt werden. Während des Absenkens wird das Düsengehäuse 4 in die Figur 5 dargestellte Stellung geschwenkt, so daß die Austrittsrichtung R der Austrittsdüse 5 horizontal gegen die Fahrzeugfront gerichtet ist. Gegebenenfalls kann zum Trocknen von unterhalb des Stoßstangenniveaus liegenden Teilen der Fahrzeugfront die Austrittsrichtung R auch schräg nach oben gerichtet sein. Während des anschließenden Trocknungsvorganges wird dann durch die Steuerung der Stellmotor 7 beeinflußt und mit diesem das Düsengehäuse 4 jeweils in eine zum Erreichen einer optimalen Trocknung günstige Stellung gebracht. Figur 6 zeigt die Stellung des Düsengehäuses 4 während der Trocknung des Fahrzeughecks. Auch hierbei kann erforderlichenfalls die Austrittsrichtung R schräg nach oben gerichtet werden, wenn die Austrittsdüse 5 unterhalb des Stoßstangenniveaus gelangt.

Anhand der Figuren 7 bis 9 wird demonstriert, daß zum Auftragen von Wasch-, Trocknungsmittel und Wachs sowie zum Durchführen einer Hochdruckreinigung das Düsengehäuse 4 so verschwenkt werden kann, daß die Austrittsrichtung der Sprühdüsen 10, 10 a jeweils etwa senkrecht zur Fahrzeugoberfläche verläuft. Dies gilt auch in diesem Fall für Bereiche unterhalb des Stoßstangenniveaus. Durch Hin- und Herschwenken des Düsengehäuses 4 kann man während des Waschens im Stoßstangenbereich den Wascheffekt verbessern. Auch hierbei ist es von Vorteil, daß nur das Düsengehäuse 4 und nicht die Gebläse 3 verschwenkt werden müssen.

## Patentansprüche

1. Trocknungsvorrichtung zum Trocknen von Fahrzeugen in Portalwaschanlagen, wobei sich Vorrichtung und Fahrzeug in Fahrzeuglängsrichtung relativ zueinander bewegen, mit einem in Abhängigkeit von der Fahrzeugkontur höhenbeweglichen, sich quer zur Fahrzeuglängsrichtung erstreckenden und um eine quer zur Fahrzeuglängsrichtung verlaufende, horizontale Schwenkachse (A) mittels eines Stellmotors (7) schwenkbaren Düsengehäuse (4), welches wenigstens eine sich quer zur Fahrzeuglängsrichtung erstreckende, schlitzförmige Austrittsdüse (5) aufweist, mit mindestens einem an das Düsengehäuse (4) angeschlossenen Gebläse (3) und mit einer auf den Stellmotor (7) einwirkenden Steuerung, um die Austrittsrichtung der Austrittsdüse der Fahrzeugkontur anzupassen, **dadurch gekennzeichnet, daß** das Düsengehäuse (4) zur Ausrichtung der Austrittsdüse (5) zum Fahrzeug und zum Abblasen einer Portaltraverse (1a) oder sonstiger über dem Fahrzeug befindlicher Teile eines Portals (1) der Portalwaschanlage um mindestens 360° schwenkbar ist.

2. Vorrichtung nach Anspruch 1 **dadurch gekennzeichnet, daß** an dem Düsengehäuse (4) ein konzentrisch zu dessen Schwenkachse (A) angeordneter Zahnkranz (6) vorgesehen ist, welcher über ein Ritzel (8) von dem Stellmotor (7) antreibbar ist.

3. Vorrichtung nach Anspruch 1 oder 2 **dadurch gekennzeichnet, daß** an dem der Austrittsdüse (5) gegenüberliegenden Bereich des Düsengehäuses (4) mindestens ein sich in Richtung der Schwenkachse (A) erstreckendes Sprührohr (9, 9 a) mit mehreren Sprühdüsen (10, 10 a) vorgesehen ist.

4. Vorrichtung nach Anspruch 3 **dadurch gekennzeichnet, daß** dem Sprührohr (9, 9 a) eine Zuleitung (11, 11 a) zugeordnet ist, die zentral im Bereich der Schwenkachse (A) in das Düsengehäuse (4) eingeführt ist und über mindestens eine radiale Verbindungsleitung (12, 12 a) mit dem Sprührohr (9, 9 a) verbunden ist.

5. Vorrichtung nach einem der vorhergehenden Ansprüche **dadurch gekennzeichnet, daß** das mindestens eine Gebläse (3) an einem Ende des Düsengehäuses (4) angeordnet und zusammen mit diesem höhenbeweglich, jedoch unverschwenkbar angeordnet ist, und daß nur das Düsengehäuse (4) um die Schwenkachse (A) schwenkbar ist.

6. Verfahren zum Trocknen von Fahrzeugen in einer Portalwaschanlage mittels eines höhenbeweglichen, sich quer zur Fahrzeuglängsrichtung erstreckenden, um eine quer zur Fahrzeuglängsrichtung verlaufende Schwenkachse (A) schwenkbaren und an ein Gebläse (3) angeschlossenen Düsengehäuses (4) mit mindestens einer schlitzförmigen Austrittsdüse (5), **dadurch gekennzeichnet, daß** vor Beginn des eigentlichen Trocknungsvorganges durch Verschwenken des Düsengehäuses (4) die Austrittsrichtung der Austrittsdüse (5) im wesentlichen nach oben gerichtet wird, um eine Portaltraverse (1a) und sonstige über dem Fahrzeug befindliche Teile eines Portals (1) der Portalwaschanlage abzublasen.

7. Verfahren nach Anspruch 6 **dadurch gekennzeichnet, daß** das Düsengehäuse (4) während des Abblasens der Portaltraverse (1a) um seine Schwenkachse (A) hin- und hergeschwenkt wird.

## Claims

1. Drying device for drying of vehicles in portal washing installations, in which the device and the vehicle move relative to one another in the longitudinal direction of the vehicle, with a nozzle housing (4) which can be adjusted in height according to the vehicle contour, extends transversely to the longitudinal direction of the vehicle and is pivotable about a horizontal pivot axis (A) running transversely to the longitudinal direction of the vehicle by means of a control motor (7) and exhibits at least one slot-shaped outlet nozzle (5) extending transversely to the longitudinal direction of the vehicle, with at least one blower (3) connected to the nozzle housing (4), and with a control device acting on the control motor (7) in order to adjust the outlet direction of the outlet nozzle to the vehicle contour, **characterised in that** the nozzle housing (4) is pivotable through at least 360° for aligning the outlet nozzle (5) on the vehicle and for directing air over a portal crossmember (1a) or other parts of a portal (1) of the portal washing installation located over the vehicle.

2. Device according to claim 1, **characterised in that** a gear ring (6) which can be driven by the control motor (7) through a pinion (8) is provided on the nozzle housing (4) and arranged concentrically with its pivot axis (A).

3. Device according to claim 1 or 2, **characterised in that** at least one spray pipe (9, 9a) having a plurality of spray nozzles (10, 10a) and extending in the direction of the pivot axis (A) is provided on the nozzle housing (4) in the area thereof lying opposite the outlet nozzle (5).

4. Device according to claim 3, **characterised in that** the spray pipe (9, 9a) has an associated line (11, 11a) which is introduced into the nozzle housing (4) centrally in the area of the pivot axis (A) and is connected to the spray pipe (9, 9a) through at least one radial connecting line (12, 12a).

5. Device according to one of the preceding claims, **characterised in that** the at least one blower (3) is located at one end of the nozzle housing (4) and arranged so that it can be adjusted in height together with the latter but cannot pivot, and **in that** only the nozzle housing (4) is pivotable about the pivot axis (A).

6. Method for drying of vehicles in a portal washing installation by means of a nozzle housing (4) which can be adjusted in height, extends transversely to the longitudinal direction of the vehicle, is pivotable about a pivot axis (A) running transversely to the longitudinal direction of the vehicle and connected to a blower (3) and has at least one slot-shaped outlet nozzle (5), **characterised in that** before the beginning of the actual drying operation, the outlet direction of the outlet nozzle (5) is essentially directed upwards by pivoting the nozzle housing (4) in order to direct air over a portal crossmember (1a) and other parts of a portal (1) of the portal washing installation located over the vehicle.

7. Method according to claim 6, **characterised in that** the nozzle housing (4) is pivoted to and fro about its pivot axis (A) while air is directed over the portal crossmember (1a).

## Revendications

1. Dispositif de séchage pour sécher des véhicules dans des stations de lavage à portique, dans lequel le dispositif et le véhicule se déplacent, dans le sens longitudinal du véhicule, relativement l'un par rapport à l'autre, avec un bâti à buse (4), pivotant au moyen d'un moteur de commande (7), mobile en hauteur en fonction du profil du véhicule, s'étendant transversalement par rapport au sens longitudinal du véhicule et autour d'un axe de pivotement horizontal (A), se dirigeant transversalement par rapport au sens longitudinal du véhicule, bâti à buse qui présente au moins une buse de sortie en forme de fente (5), s'étendant transversalement par rapport au sens longitudinal du véhicule, avec au moins un ventilateur (3), raccordé au bâti à buse (4) et avec une commande, qui agit sur le, moteur de commande (7), pour adapter le sens de sortie de la buse de sortie au profil du véhicule, **caractérisé en ce que** le bâti à buse (4) peut pivoter d'au moins 360° pour aligner la buse de sortie (5) par rapport au véhicule et pour souffler une traverse de portique (1a) ou d'autres parties d'un portique (1) de la station de lavage à portique, qui se trouvent au-dessus du véhicule.

2. Dispositif selon la revendication 1, **caractérisé en ce qu'**il est prévu, sur le bâti à buse (4), une couronne dentée (6), disposée de manière concentrique par rapport à son axe de pivotement (A), qui peut être entraînée par l'intermédiaire d'un pignon (8) par le moteur de commande (7).

3. Dispositif selon la revendication 1 ou 2, **caractérisé en ce qu'**il est prévu, dans la zone opposée à la buse de sortie (5) du bâti à buse (4), au moins un tuyau de pulvérisation (9, 9a), s'étendant dans le sens de l'axe de pivotement (A), avec plusieurs buses de pulvérisation (10, 10a).

4. Dispositif selon la revendication 3, **caractérisé en ce qu'**il est affecté au tuyau de pulvérisation (9, 9a) une conduite d'alimentation (11, 11a), qui est introduite de manière centrale dans la zone de l'axe de pivotement (A) dans le bâti à buse (4) et qui est reliée, par l'intermédiaire d'au moins une conduite de connexion radiale (12, 12a), avec le tuyau de pulvérisation (9, 9a).

5. Dispositif selon l'une des revendications précédentes, **caractérisé en ce que** le au moins un ventilateur (3) est disposé à une extrémité du bâti à buse (4) et est disposé, conjointement avec celui-ci, de manière mobile en hauteur, cependant de manière non pivotante et que seul le bâti à buse (4) peut pivoter autour de l'axe de pivotement (A).

6. Procédé pour sécher des véhicules dans une station de lavage à portique au moyen d'un bâti à buse (4), mobile en hauteur, s'étendant transversalement par rapport au sens longitudinal du véhicule, pouvant pivoter autour d'un axe de pivotement (A), se dirigeant transversalement par rapport au sens longitudinal du véhicule (A) et raccordé à un ventilateur (3), avec au moins une buse de sortie en forme de fente (5), **caractérisé en ce qu'**avant le début du véritable processus de séchage par pivotement du bâti à buse (4), le sens de sortie de la buse de sortie (5) est orienté essentiellement vers le haut, pour souffler une traverse de portique (1a) et d'autres parties d'un portique (1) de la station de lavage à portique, qui se trouvent au-dessus du véhicule.

7. Procédé selon la revendication 6, **caractérisé en ce que** le bâti à buse (4) est pivoté dans les deux sens, pendant le soufflage de la traverse de portique (1a), autour de son axe de pivotement (A).
